# FASCICULE DE BREVET EUROPEEN

(11) **EP 2 875 538 B1**
(45) Date de publication et mention de la délivrance du brevet: **15.01.2020**
(21) Numéro de dépôt: 13762252.8
(22) Date de dépôt: 03.07.2013
(51) Int. Cl.: H01M 2/08, H01M 10/04, H01M 10/0525, H01M 10/0585, H01M 4/485, H01M 4/58, H01M 4/02

(54) **BATTERIE LI-ION BIPOLAIRE A ÉTANCHÉITÉ AMÉLIORÉE ET PROCÉDÉ DE RÉALISATION ASSOCIÉ**
BIPOLARE LI-IONEN-BATTERIE MIT VERBESSERTER DICHTUNG UND ZUGEHÖRIGES HERSTELLUNGSVERFAHREN
BIPOLAR LI-ION BATTERY WITH IMPROVED SEAL AND ASSOCIATED PRODUCTION PROCESS

(30) Priorité: 17.07.2012 FR 1256907
(43) Date de publication de la demande: 27.05.2015
(73) Titulaire: Commissariat à l'Énergie Atomique et aux Énergies Alternatives, 75015 Paris (FR)
(72) Inventeur: DAMLENCOURT, Jean-François, 38190 Laval (FR); AUGENDRE, Emmanuel, 38330 Montbonnot (FR); FOURNEL, Frank, 38190 Villard-bonnot (FR)
(74) Mandataire: Nony
(86) Numéro de dépôt international: PCT/IB2013/055443
(87) Numéro de publication internationale: WO 2014/013373

(56) Documents cités:
- EP-A1- 1 841 001
- EP-A1- 2 399 864
- EP-A2- 1 418 638
- US-A1- 2003 224 242
- US-A1- 2005 112 461
- US-A1- 2006 003 223
- US-A1- 2011 091 770
- US-A1- 2012 171 567

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins un collecteur de courant à fonction bipolaire, aussi appelé batterie bipolaire. Dans une telle batterie bipolaire, le collecteur bipolaire aussi appelé électrode bipolaire, supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à améliorer l'étanchéité des générateurs électrochimiques vis-à-vis de l'électrolyte, et en particulier à améliorer l'étanchéité d'une batterie bipolaire vis-à-vis de l'électrolyte sous forme liquide.

### Etat de la technique

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire par court-circuits ioniques.

Cela est d'ailleurs corroboré par le fait que la majorité de la littérature brevets portant sur le domaine des batteries Li-ion bipolaires concerne des solutions d'étanchéité, aussi appelée scellement, pour éviter les fuites d'électrolyte d'un compartiment à l'autre (courts circuits ioniques). Quelle que soit la soit le système d'étanchéité retenu, il doit :
- être résistant chimiquement à l'électrolyte liquide, par exemple constitué d'une solution de sel de Lithium LiPF₆ dans un mélange de solvant carboné d'éthylène (EC), diméthyle carbonate (DMC) ;
- être facile à mettre en œuvre : en effet, lors des opérations d'empilement des différents éléments constituants une batterie bipolaire, la mise en œuvre de l'étanchéité doit pouvoir être compatible avec une ligne de fabrication industrielle et être réalisée à des relativement basses températures ne générant pas ou prou de dégradation des électrodes, du séparateur ou encore de l'électrolyte;
- assurer une étanchéité totale à long terme.

Parmi les demandes de brevet ou brevets déjà cités ci-dessus, on peut citer le brevet US 7220516 qui décrit une solution avec un film adhésif flexible 5, 6, collé sur la périphérie du collecteur bipolaire.

On peut également citer le brevet US 7320846 qui décrit une solution d'enrobage des collecteurs 4 et électrolytes 6 dans une résine 10.

On peut également citer le brevet US 7163765 qui décrit une solution d'étanchéité avec des entretoises 9 mixtes en polyamide/PP agencées entre collecteurs bipolaires le polyamide étant soudé directement à la périphérie des collecteurs à distance des cellules.

Le brevet US 7097937 propose quant à lui une solution d'étanchéité double puisqu'une barrière intérieure 14,22 en fluoropolymère est agencée sur la périphérie du collecteur bipolaire 11 et un cadre extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11.

On peut citer encore la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

On peut citer enfin la demande WO 2011/157751 qui décrit une solution d'intégration des moyens d'étanchéité à base de polymère à une grille ou feuille métallique à fonction de collecteur de courant.

La demande US 2011/0911770 décrit une batterie bipolaire Li-ion à empilement avec des collecteurs en aluminium recouverte par un élément d'étanchéité en polypropylène. L'étanchéité est réalisée par thermoscellage.

La demande US 2006/0003223 A1 quant à elle décrit une batterie nickel-hydrogène avec des éléments de scellement en plastique. Ces éléments sont joints par thermoscellage.

Ainsi, on peut résumer de la manière suivante les solutions déjà envisagées pour améliorer l'étanchéité des compartiments entre eux vis-à-vis de l'électrolyte dans une batterie bipolaire Li-ion :
- réalisation systématique du collecteur de courant bipolaire aussi appelé électrode bipolaire sous la forme d'une plaque,
- utilisation de colles/polymère ou résines diverses à la périphérie de la plaque,
- augmentation du format de plaque de collecteur de courant bipolaire pour créer une barrière supplémentaire à l'électrolyte ;
- intégration des moyens d'étanchéité à base de polymère à une grille ou feuille métallique à fonction de collecteur de courant.

Toutes ces solutions d'étanchéité déjà envisagées ne pas pleinement satisfaisantes. En effet, elles utilisent toutes des polymères ou résines qui présentent une robustesse par rapport à l'électrolyte qui est faible lors du fonctionnement de la batterie bipolaire et dans la durée. De plus, la mise en œuvre des solutions avec polymères est délicate car ces derniers_ont tendance à fluer au-delà d'une certaine température qui n'est certes pas prévue d'être atteinte lors du fonctionnement de la batterie mais peut l'être en cas d'emballement. Enfin, le thermoscellage d'un polymère au niveau d'un compartiment prévu lors de la fabrication de la batterie bipolaire peut entrâiner une détérioration d'étanchéité des compartiments électrochimiques déjà scellés du fait même du chauffage répété qui peut entraîner un fluage intempestif du polymère de ces derniers.

Le but général de l'invention est de proposer une autre solution que celles déjà envisagées pour améliorer l'étanchéité des compartiments entre eux vis-à-vis de l'électrolyte, en particulier de l'électrolyte liquide, dans une batterie bipolaire Li-ion, plus généralement dans un générateur électrochimique au lithium.

Un but particulier est de proposer une solution d'étanchéité d'une batterie bipolaire, plus généralement d'un générateur électrochimique au lithium, vis-à-vis de l'électrolyte, plus particulièrement d'un électrolyte liquide, qui soit robuste lors du fonctionnement et dans la durée et facile à mettre en œuvre, de préférence à relativement basse température.

### Exposé de l'invention

Pour ce faire, l'invention a pour objet une batterie bipolaire, de type Li-ion, selon la revendication 1, comprenant :
- au moins une première et deuxième cellules électrochimiques empilées l'une sur l'autre et comportant chacune une anode, une cathode et un électrolyte,
- au moins un collecteur de courant bipolaire dont une face est recouverte de l'anode en matériau d'insertion au lithium de la première cellule et la face opposée est recouverte de la cathode en matériau d'insertion au lithium de la deuxième cellule, le collecteur bipolaire comportant à sa périphérie, sur chacune de ses faces, au moins un cordon d'un matériau isolant électrique constituant une zone périphérique d'une paroi étanche à l'électrolyte de la première ou deuxième cellules, qui entoure celle-ci,
- au moins un premier collecteur de courant adjacent au collecteur bipolaire dont une face est recouverte de la cathode de la première cellule ; le premier collecteur adjacent comportant également à sa périphérie, au moins un cordon d'un matériau isolant électrique constituant également une zone périphérique d'une paroi étanche à l'électrolyte de la première cellule,
- au moins un deuxième collecteur de courant adjacent au collecteur bipolaire dont une face est recouverte de l'anode de la deuxième cellule; le deuxième collecteur adjacent comportant également à sa périphérie, au moins un cordon d'un matériau isolant électrique constituant également une zone périphérique de la paroi étanche à l'électrolyte de la deuxième cellule.

Selon l'invention, chaque paroi étanche est obtenue par une technique choisie parmi le collage moléculaire, le scellement anodique entre un cordon du collecteur bipolaire et le cordon du collecteur adjacent, et la fusion eutectique entre une couche en métal ou alliage métallique à point eutectique déposée sur un cordon du collecteur bipolaire et une couche en métal ou alliage métallique à point eutectique déposée sur un cordon du collecteur adjacent.

Ainsi, une première alternative de l'invention est caractérisée en ce que chaque paroi étanche est obtenue par collage moléculaire entre un cordon du collecteur bipolaire et le cordon du collecteur adjacent.

Par « collage moléculaire », on entend ici et dans le cadre de l'invention, une adhérence moléculaire par mise en contact direct de deux cordons, c'est-à-dire sans l'utilisation d'un matériau spécifique intermédiaire pour réaliser l'adhérence, tel qu'une colle, polymère, métal à basse température de fusion. On peut se reporter à la publication [1] qui détaille la mise en œuvre de cette technique dans le domaine de la microélectronique.

Grâce à l'invention, on pallie aux solutions d'étanchéité à base de résine ou de polymère selon l'état de l'art. En effet, tout d'abord, le collage moléculaire est de mise en œuvre maitrisée. Un collage initial s'effectue par liaisons de type de van der waals uniquement par mise en contact direct des cordons, avantageusement à température ambiante. Puis, le collage moléculaire définitif s'effectue par liaisons moléculaires fortes de type covalentes par chauffage à une relativement basse température, typiquement inférieure ou égale à 200°C, de préférence entre 100 et 200°C, durant environ 1 heure. Une fois, ce collage moléculaire définitif réalisé pour un compartiment électrochimique, il n'y a plus de risque de modification de la paroi étanche même en cas de chauffage des autres compartiments de la batterie ou d'échauffement de cette dernière, notamment lorsqu'elle est susceptible de fonctionner en mode dégradé (température au-dessus de la température de fonctionnement nominale). De plus, contrairement aux solutions d'étanchéité incorporant des polymères, le collage moléculaire sera renforcé par des échauffements de la batterie.

Les matériaux isolants électriques constitutifs des cordons selon l'invention sont solides, ce qui permet de conserver une épaisseur pour chaque compartiment électrochimique de la batterie. Le ou les matériaux isolants choisi (s) présentent) une résistance chimique à l'électrolyte élevée et une résistance à des températures de fonctionnement élevées.

Le matériau de chaque cordon est de l'oxyde d'aluminium (Al₂O₃) aussi appelé Alumine.

Les inventeurs pensent d'une part que ce matériau est un très bon isolant électrique pour l'application batterie bipolaire visée selon l'invention.

D'autre part, l'alumine peut être facilement déposée sous la forme d'une couche de faible épaisseur sur le matériau métallique constitutif d'un collecteur de courant d'une batterie bipolaire. Ainsi, pour un collecteur de courant en Aluminium, un traitement corona, qui consiste à effectuer une décharge électrique à haute fréquence vers la matière, ici le matériau métallique, permet d'obtenir en surface une couche de faible épaisseur d'Alumine. Cette couche d'alumine en surface sert elle-même de couche d'accroche à la couche d'alumine qui constitue un cordon déposé. Le traitement corona est un traitement oxydant de préférence réalisé sous ultraviolets (UV) et sous oxygène O₂.

Une fois, un cordon d'alumine déposé, on réalise de préférence une fonctionnalisation, par exemple par un traitement par un mélange d'eau, d'eau oxygénée et d'ammoniaque diluée (5 :1 :1) afin d'obtenir des liaisons Al-OH en surface des cordons. Ainsi, la mise en contact de deux cordons avec liaisons Al-OH permet de réaliser un collage initial par liaisons hydrogènes qui comptent parmi les liaisons les plus énergétiques des liaisons de van der waals, de préférence à température ambiante.

Le collage moléculaire final entre deux cordons est réalisé par chauffage à plus haute température, de préférence égale à 200°C.

Une deuxième alternative de l'invention est caractérisée en ce que chaque paroi étanche est obtenue par scellement anodique entre un cordon du collecteur bipolaire et le cordon du collecteur adjacent. De préférence, selon cette deuxième alternative, le matériau de chaque cordon est un oxyde métallique dopé au bore, par ex de l'alumine ou de l'oxyde de silicium SiO₂ dopé au bore ou bien du ZrO₂ dopé B.

Par « scellement anodique », on entend ici et dans le cadre de l'invention, un collage qui consiste à mettre en contact à haute température, typiquement entre 300°C et 400°C, deux cordons puis à appliquer une différence de potentiel de plusieurs centaines de volts entre eux. La migration ici des dopants au bore jusqu'à l'interface assure un collage électrostatique de grande résistance. On peut se reporter à la publication [2] qui détaille la mise en œuvre de cette technique.

Dans cette deuxième alternative de l'invention, c'est la diffusion des ions, de préférence les dopants au bore des cordons en contact qui permet l'obtention de liaisons moléculaires fortes.

Une troisième alternative de l'invention est caractérisée en ce que chaque cordon est revêtu d'une couche en métal ou alliage métallique à point eutectique, et chaque paroi étanche est obtenue par fusion eutectique entre la couche du cordon du collecteur bipolaire et la couche du cordon du collecteur adjacent.

Par « fusion eutectique », on entend ici et dans le cadre de l'invention une fusion au point eutectique des couches de métal ou en alliage métallique appliquées l'une sur l'autre par thermocompression.

Cette troisième alternative est choisie préférentiellement à la première alternative, lorsque les conditions de rugosité et de planéité des cordons ne permettent pas de réaliser le collage moléculaire. Ainsi, par exemple lorsque le collecteur de courant est rugueux, typiquement avec une rugosité supérieure à 0,5 nm, ou lorsqu'il présente un défaut de planéité, on préfère déposer une couche métallique sur le cordon. De préférence, selon cette troisième alternative, le matériau de chaque cordon est de l'oxyde d'aluminium (Al₂O₃) et le matériau d'une couche est de l'aluminium Al et du germanium pour l'autre couche, c'est-à-dire pour la couche déposée sur le cordon adjacent. Alternativement, on peut avoir une couche de Silicium en regard d'une couche d'or pour former un alliage eutectique Si/Au. On réalise ainsi une fusion eutectique des couches d'aluminium entre elles, l'alumine Al₂O₃ permettant de conserver l'isolation électrique entre deux collecteurs de courants adjacents.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiès et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti_{(5-y1})N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec yl compris entre 0 et 0,2 et N est un élément chimique choisi parmi Na, K, Mg, Nb, Al, Ni, Co, Zr, Cr, Mn, Fe, Cu, Zn, Si et Mo.

Par « collecteur de courant adjacent au collecteur de courant bipolaire », on entend un collecteur qui est le plus proche du collecteur de courant bipolaire dqans l'empilement et qui peut être aussi bien un autre collecteur de courant bipolaire qu'un collecteur de courant terminal de l'empilement.

De préférence, l'épaisseur de chaque cordon est sensiblement égale à l'épaisseur d'une électrode sur la même face d'un collecteur.

De préférence encore, l'épaisseur de chaque cordon est comprise entre 20 et 70 µm, de préférence 50 µm plus ou moins 5 µm.

Avanatgeusement, la largeur de chaque cordon est comprise entre 0,1 et 2 cm. Selon un mode de réalisation, la batterie bipolaire comprend un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

Selon une variante de réalisation, toutes les anodes sont en Li₄Ti₅O₁₂ et les cathodes en LiFePO₄.

L'invention a également pour objet, selon un autre de ses aspects un procédé de réalisation d'une batterie bipolaire selon la revendication 9, comprenant au moins une première et deuxième cellules électrochimiques empilées l'une sur l'autre et comportant chacune une anode, une cathode et un électrolyte,
a/ réalisation d'un collecteur de courant bipolaire avec une face recouverte de l'anode en matériau d'insertion au lithium de la première cellule et la face opposée recouverte de la cathode en matériau d'insertion au lithium de la deuxième cellule ;
b/ réalisation d'un premier collecteur de courant, destiné à être adjacent au collecteur bipolaire dont une face est recouverte de la cathode de la première cellule
c/ réalisation d'un deuxième collecteur de courant, destiné à être adjacent au collecteur bipolaire dont une face est recouverte de l'anode de la deuxième cellule
d/ dépôt d'un cordon en matériau isolant électrique à la périphérie de chaque face de chaque collecteur recouverte d'une cathode ou d'une anode ;
e/ empilement des trois collecteurs avec intercalage d'un séparateur entre deux adjacents, l'empilement avec intercalage étant réalisé de sorte que :
   - la cathode du premier collecteur adjacent est en regard de l'anode du collecteur bipolaire en étant séparés d'un premier séparateur et avec mise en contact de leurs cordons ;
   - l'anode du deuxième collecteur adjacent est en regard de la cathode du collecteur bipolaire en étant séparés d'un deuxième séparateur et avec mise en contact de leurs cordons ;
f/ chauffage des cordons en contact à la périphérie des collecteurs, les séparateurs étant imprégnés chacun d'un électrolyte.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le chauffage selon l'étape f/ est de préférence réalisé à l'aide de mors chauffants en forme de U autour des parties périphériques des collecteurs.

La mise en contact des cordons selon l'étape e/ est de préférence réalisée à température ambiante.

### Description détaillée

D'autres avantages et caractéristiques ressortiront mieux à la lecture de la description détaillée, faite à titre illustratif en référence aux figures suivantes parmi lesquelles:
- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- les figures 4A à 4H sont des vues en coupe longitudinale montrant les différentes étapes de réalisation d'une batterie bipolaire au lithium selon l'invention,
- les figures 5A et 5B sont des vues de détail montrant le collage moléculaire réalisé dans les étapes représentées en figures 4F et 4H;
- les figures 6A et 6B sont des vues de détail montrant une autre alternative de réalisation de l'étanchéité que celle montrées aux figures 5A et 5B.

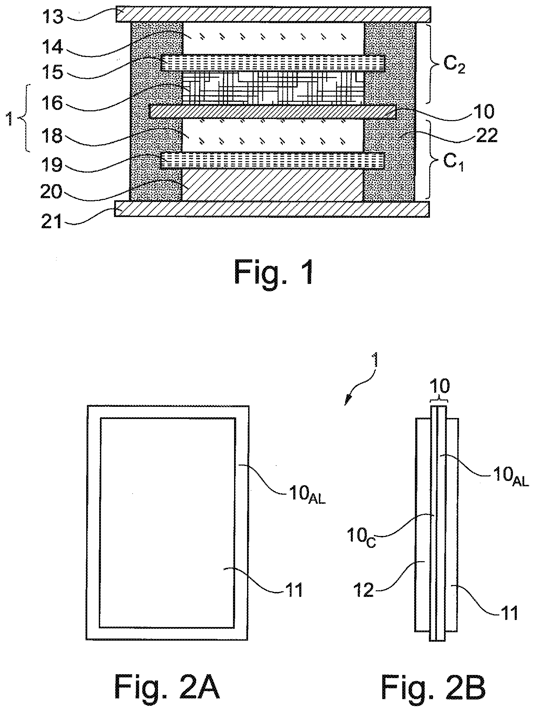

Par souci de clarté, les mêmes références désignant les mêmes éléments de batterie bipolaire selon l'état de l'art et selon l'invention sont utilisées pour toutes les figures 1 à 6B.

On a représenté une batterie bipolaire Li-ion selon l'état de l'art en figure 1, telle qu'elle est illustrée dans la demande de brevet WO 03/047021. Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelé collecteur de courant bipolaire, comprend une couche d'anode 16 et une couche de cathode 18 de part et d'autre d'un substrat conducteur en aluminium 10 sous la forme d'une plaque. Les électrodes inférieure 20 et supérieure 14 sont séparées de l'électrode bipolaire 1 par deux séparateurs 15, 19 dans_lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 10.

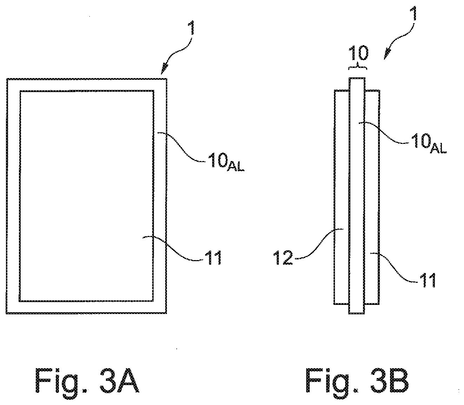

Un collecteur de courant bipolaire 10 selon l'état de l'art est, en fonction des matériaux d'insertion aux ions lithium employés pour la réalisation des électrodes :
- soit constitué de deux plaques superposées, dont l'une typiquement en aluminium 10Al est recouverte par une cathode 11 et l'autre typiquement en cuivre 10C est recouverte par une anode 12 (figures 2A et 2B),
- soit constitué d'une seule plaque typiquement en aluminium 10Al recouverte sur une des faces par une cathode 11 et sur l'autre de ses faces par une anode 12 (figures 3A et 3B). La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

La réalisation des joints 22 ou l'augmentation des plaques 10 de l'électrode bipolaire selon l'état de l'art pour y parvenir ne sont pas pleinement satisfaisants.

Aussi, les inventeurs proposent une nouvelle solution d'étanchéité d'une batterie bipolaire Li-ion vis-à-vis de l'électrolyte, plus particulièrement d'un électrolyte liquide, qui soit robuste lors du fonctionnement et dans la durée et facile à mettre en œuvre, de préférence à relativement basse température.

De manière surprenante, les inventeurs ont pensé à mettre en œuvre une technique de collage moléculaire pour réaliser les joints d'étanchéité dans une batterie bipolaire. Cette technique de collage moléculaire a certes déjà fait ses preuves dans le domaine de la microélectronique mais dans ce domaine il s'agit de faire adhérer ensemble deux surfaces de substrat directement. Autrement dit, dans ce domaine, il s'agit d'assembler deux substrats ensemble et il n'y avait aucune évidence à utiliser cette technique de collage moléculaire pour réaliser un joint en rapportant au préalable des cordons en matériau isolant électrique sur une surface de collecteur en matériau conducteur.

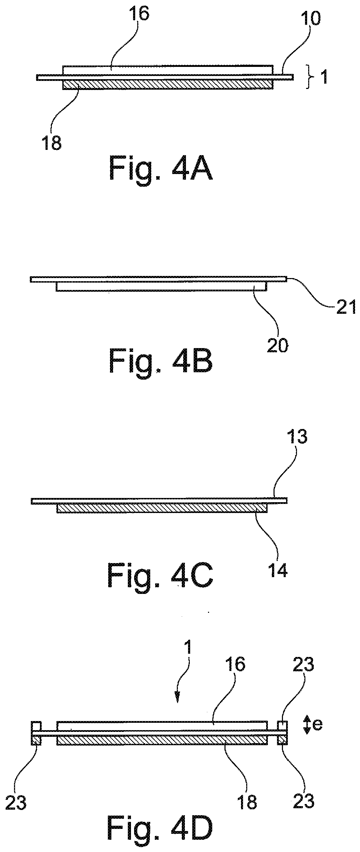

Les étapes de réalisation d'une batterie bipolaire avec les moyens d'étanchéité par collage moléculaire selon l'invention sont décrites ci-après en relation avec les figures 4A à 4B. La batterie réalisée comporte deux cellules C1, C2 empilées l'une sur l'autre et comportant chacune une anode, une cathode et un électrolyte. On précise que tous les substrats 10, 13, 21 sont en aluminium. Toutes les anodes du Li₄Ti₅O₁₂ et toutes les cathodes en LiFePO₄. Les séparateurs sont tous dans le même matériau tel que le polyfluorure de vinylidène (PVDF). L'électrolyte utilisé est par un mélange de carbonate et un sel de lithium LiPF₆.

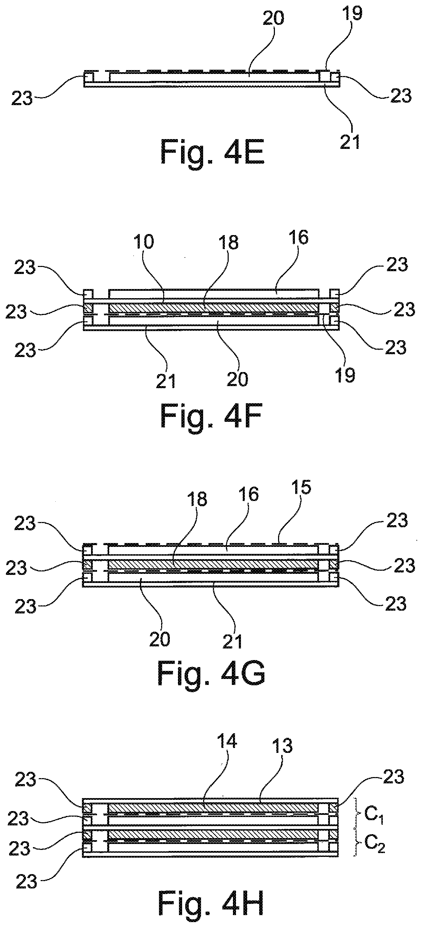

On précise que toutes les étapes 1 à 6 sont réalisées à température ambiante.
Etape 1: on réalise un collecteur de courant bipolaire 1 avec une face recouverte de la cathode 18 de la première cellule C1 et la face opposée recouverte de l'anode 16 de la deuxième cellule C2 (figure 4A).
Etape 2: on réalise un collecteur de courant terminal 21 avec une face recouverte de l'anode 20 de la première cellule C1 (figure 4B).
Etape 3: on réalise un collecteur de courant terminal 13 avec une face recouverte de la cathode 18 de la deuxième cellule C2 (figure 4C).
Etape 4: on fait un dépôt d'un cordon 23 en matériau isolant électrique à la périphérie de chaque face de chaque collecteur recouverte d'une cathode 14 ou 18 ou d'une anode 16 ou 20. Tous les cordons 23 sont réalisés dans le matériau isolant électrique qui est de l'oxyde d'aluminium, déposés sous la forme d'une couche mince d'épaisseur e de l'ordre de 50 µm. En figure 4D, on a représenté le collecteur de courant bipolaire 1 avec à sa périphérie sur chacune de ses deux faces, un cordon 23 en alumine.
Etape 5 : On intercale un premier séparateur 19 en le posant sur l'anode 20 du premier collecteur de courant terminal 21 (figure 4E).
   On empile le collecteur de courant bipolaire 1 sur le premier collecteur terminal 21 en mettant en contact direct leurs cordons 23 (figure 4F). Cette mise en contact direct réalise un collage initial entre les cordons 23 par des liaisons électrostatiques à hydrogène faibles.
Etape 6 : On intercale le deuxième premier séparateur 15 en le posant sur l'anode 16 du collecteur de courant bipolaire 1 (figure 4G).
   On empile le deuxième collecteur de courant terminal 13 sur le collecteur bipolaire 1 en mettant en contact direct leurs cordons (figure 4H). Cette mise en contact direct réalise un collage initial entre les cordons 23 par des liaisons faibles hydrogènes.
Etape 7 : On réalise un chauffage à l'aide de mors chauffant en forme de U entourant l'empilement de la batterie bipolaire à deux cellules C1, C2 au niveau de sa périphérie. Ce chauffage permet de transformer les liaisons faibles hydrogènes réalisées entre cordons 23 en liaisons covalentes.

L'étanchéité ainsi obtenu par tous les cordons 23 est ainsi parfaite vis-à-vis de l'électrolyte.

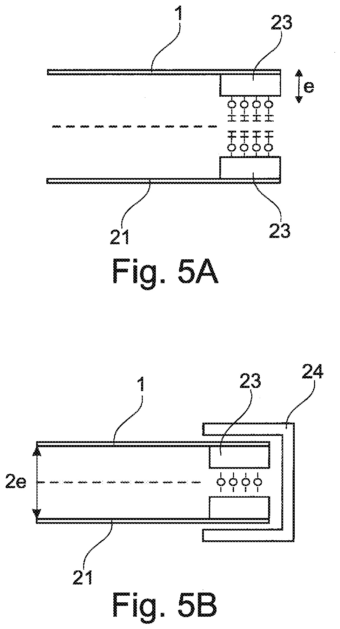

On a représenté aux figures 5A et 5B les différentes étapes de collage moléculaire entre le premier collecteur terminal 21 et le collecteur bipolaire :
- lors de la mise en contact direct des cordons 23 d'alumine Al₂O₃, des liaisons à hydrogène faible sont créées (figure 5A) ;
- lors du chauffage à l'aide des mors 24 en forme de U entourant l'empilement, les liaisons covalentes fortes sont créées entre cordons 23 préalablement en contact direct (figure 5B).

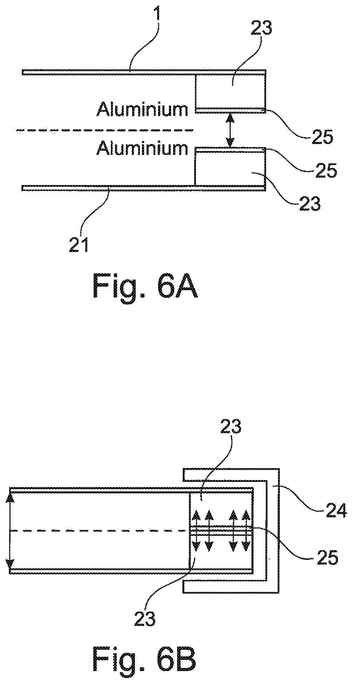

Selon une autre alternative de l'invention, en particulier lorsque les substrats en aluminium des collecteurs de courant sont rugueux ou présentent un défaut de planéité, une fusion eutectique est possible entre deux couches de germanium et d'aluminium 25 (figure 6B), ces couches 25 étant préalablement déposées sur chaque cordon 23 en alumine Al₂O₃ (figure 6A).

En ce qui concerne les électrolytes, on peut utiliser un électrolyte sous forme polymère ou sous forme liquide imprégné dans un séparateur. Pour l'activation de ces derniers, on peut procéder par imprégnation de chaque séparateur avant leur intégration lors du montage. Alternativement, on peut réaliser le montage avec empilement de l'ensemble de la batterie, réaliser le scellement conformément à l'invention puis ménager via un tuyau disposé entre les deux cordons, une entrée pour l'électrolyte liquide pour un remplissage ultérieur.

L'invention n'est pas limitée aux exemples qui viennent d'être décrits ; on peut notamment combiner entre elles des caractéristiques des exemples illustrés au sein de variantes non illustrées.

Il va de soi que si l'étanchéité selon l'invention par collage moléculaire a été décrite en relation avec une batterie bipolaire à deux cellules empilées, elle peut être réalisée de la même manière pour une batterie à un nombre n de cellules empilées en répétant les étapes 1 à 7 précédentes avec un nombre égal à n-2 de collecteurs bipolaires et deux collecteurs de courant terminaux 13, 21.

### REFERENCE CITEE

[1]: M.Bruel, Electronic Letter, 31 (14), p.1201, 1995;
[2]: G.Wallis and D. Pomerantz, Journal of Applied Physics 40 (10) pp 3946-3949.

## Revendications

1. Batterie bipolaire, de type Li-ion, comprenant :
- au moins une première et deuxième cellules électrochimiques (C1, C2) empilées l'une sur l'autre et comportant chacune une anode, une cathode et un électrolyte,
- au moins un collecteur de courant bipolaire (1) dont une face est recouverte de l'anode (16) en matériau d'insertion au lithium de la première cellule (C1) et la face opposée est recouverte de la cathode (18) en matériau d'insertion au lithium de la deuxième cellule (C2), le collecteur bipolaire comportant à sa périphérie, sur chacune de ses faces, au moins un cordon (23) d'un matériau isolant électrique constituant une zone périphérique d'une paroi étanche à l'électrolyte de la première ou deuxième cellules, qui entoure celle-ci,
- au moins un premier collecteur de courant (13) adjacent au collecteur bipolaire dont une face est recouverte de la cathode (14) de la première cellule (C1); le premier collecteur adjacent comportant également à sa périphérie, au moins un cordon (23) d'un matériau isolant électrique constituant également une zone périphérique d'une paroi étanche à l'électrolyte de la première cellule,
- au moins un deuxième collecteur (21) de courant adjacent au collecteur bipolaire dont une face est recouverte de l'anode (20) de la deuxième cellule (C2); le deuxième collecteur adjacent comportant également à sa périphérie, au moins un cordon (23) d'un matériau isolant électrique constituant également une zone périphérique de la paroi étanche à l'électrolyte de la deuxième cellule,
chaque paroi étanche étant obtenue par une technique choisie parmi :
- le collage moléculaire, le matériau de chaque cordon étant de l'oxyde d'aluminium (Al₂O₃),
- le scellement anodique entre un cordon (23) du collecteur bipolaire et le cordon (23) du collecteur adjacent, et
- la fusion eutectique entre une couche (25) en métal ou alliage métallique à point eutectique déposée sur un cordon du collecteur bipolaire et une couche (25) en métal ou alliage métallique à point eutectique déposée sur un cordon du collecteur adjacent.

2. Batterie bipolaire selon la revendication 1, chaque paroi étanche étant obtenue par scellement anodique, le matériau de chaque cordon étant de l'oxyde de silicium SiO₂ dopé au bore.

3. Batterie bipolaire selon la revendication 1, chaque paroi étanche étant obtenue par la fusion eutectique, le matériau de chaque cordon étant de l'oxyde d'aluminium (Al₂O₃) et le matériau d'une couche (25) déposée sur un cordon étant de l'aluminium et du germanium pour la couche (25) déposée sur le cordon adjacent.

4. Batterie bipolaire selon l'une des revendications précédentes, l'épaisseur de chaque cordon étant sensiblement égale à l'épaisseur d'une électrode sur la même face d'un collecteur.

5. Batterie bipolaire selon l'une des revendications précédentes, l'épaisseur de chaque cordon étant comprise entre 20 et 70 µm, de préférence 50 µm plus ou moins 5 µm.

6. Batterie bipolaire selon l'une des revendications précédentes, la largeur de chaque cordon étant comprise entre 0,1 et 2 cm.

7. Batterie bipolaire selon l'une des revendications précédentes, comprenant un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

8. Batterie bipolaire selon l'une des revendications précédentes, les anodes sont en Li₄Ti₅O₁₂ et les cathodes en LiFePO₄.

9. Procédé de réalisation d'une batterie bipolaire selon l'une des revendications précédentes comprenant au moins une première et deuxième cellules électrochimiques empilées l'une sur l'autre et comportant chacune une anode, une cathode et un électrolyte,
a/ réalisation d'un collecteur de courant bipolaire avec une face recouverte de l'anode en matériau d'insertion au lithium de la première cellule et la face opposée recouverte de la cathode en matériau d'insertion au lithium de la deuxième cellule ;
b/ réalisation d'un premier collecteur de courant, destiné à être adjacent au collecteur bipolaire dont une face est recouverte de la cathode de la première cellule
c/ réalisation d'un deuxième collecteur de courant, destiné à être adjacent au collecteur bipolaire dont une face est recouverte de l'anode de la deuxième cellule
d/ dépôt d'un cordon en matériau isolant électrique à la périphérie de chaque face de chaque collecteur recouverte d'une cathode ou d'une anode ;
e/ empilement des trois collecteurs avec intercalage d'un séparateur entre deux adjacents, l'empilement avec intercalage étant réalisé de sorte que :
- la cathode du premier collecteur adjacent est en regard de l'anode du collecteur bipolaire en étant séparés d'un premier séparateur et avec mise en contact de leurs cordons ;
- l'anode du deuxième collecteur adjacent est en regard de la cathode du collecteur bipolaire en étant séparés d'un deuxième séparateur et avec mise en contact de leurs cordons ;
f/ chauffage des cordons en contact à la périphérie des collecteurs, les séparateurs étant imprégnés chacun d'un électrolyte.

10. Procédé selon la revendication 9, le chauffage selon l'étape f/ étant réalisé à l'aide de mors chauffants en forme de U autour des parties périphériques des collecteurs.

11. Procédé selon la revendication 9 ou 10, la mise en contact des cordons selon l'étape e/ étant réalisée à température ambiante.

## Patentansprüche

1. Bipolare Batterie vom Typ einer Li-Ionen-Batterie, welche umfasst:
- wenigstens eine erste und eine zweite elektrochemische Zelle (C1, C2), die übereinandergestapelt sind und jeweils eine Anode, eine Kathode und einen Elektrolyten aufweisen,
- wenigstens einen bipolaren Stromkollektor (1), von dem eine Seite mit der Anode (16) aus Lithiuminsertionsmaterial der ersten Zelle (C1) bedeckt ist und die gegenüberliegende Seite mit der Kathode (18) aus Lithiuminsertionsmaterial der zweiten Zelle (C2) bedeckt ist, wobei der bipolare Kollektor an seinem Umfang auf jeder seiner Seiten wenigstens ein Band (23) aus einem elektrisch isolierenden Material aufweist, das einen Umfangsbereich einer gegenüber dem Elektrolyten der ersten oder zweiten Zelle dichten Wand bildet, welcher die Letztere umgibt,
- wenigstens einen dem bipolaren Kollektor benachbarten ersten Stromkollektor (13), von dem eine Seite mit der Kathode (14) der ersten Zelle (C1) bedeckt ist; wobei der benachbarte erste Kollektor ebenfalls an seinem Umfang wenigstens ein Band (23) aus einem elektrisch isolierenden Material aufweist, das ebenfalls einen Umfangsbereich einer gegenüber dem Elektrolyten der ersten Zelle dichten Wand bildet,
- wenigstens einen dem bipolaren Kollektor benachbarten zweiten Stromkollektor (21), von dem eine Seite mit der Anode (20) der zweiten Zelle (C2) bedeckt ist; wobei der benachbarte zweite Kollektor ebenfalls an seinem Umfang wenigstens ein Band (23) aus einem elektrisch isolierenden Material aufweist, das ebenfalls einen Umfangsbereich der gegenüber dem Elektrolyten der zweiten Zelle dichten Wand bildet,
**dadurch gekennzeichnet, dass** jede dichte Wand durch ein Verfahren erhalten wird, das ausgewählt ist aus
- dem Molekularkleben, wobei das Material jedes Bandes Aluminiumoxid (Al₂O₃) ist,
- dem anodischen Bonden zwischen einem Band (23) des bipolaren Kollektors und dem Band (23) des benachbarten Kollektors, und
- dem eutektischen Bonden zwischen einer Schicht (25) aus Metall oder Metalllegierung mit eutektischem Punkt, die auf ein Band des bipolaren Kollektors aufgebracht ist, und einer Schicht (25) aus Metall oder Metalllegierung mit eutektischem Punkt, die auf ein Band des benachbarten Kollektors aufgebracht ist.

2. Bipolare Batterie nach Anspruch 1, wobei jede dichte Wand durch anodisches Bonden erhalten wird, wobei das Material jedes Bandes mit Bor dotiertes Siliziumoxid SiO₂ ist.

3. Bipolare Batterie nach Anspruch 1, wobei jede dichte Wand durch eutektisches Bonden erhalten wird, wobei das Material jedes Bandes Aluminiumoxid (Al₂O₃) ist und das Material einer auf ein Band aufgebrachten Schicht (25) Aluminium ist, und Germanium für die auf das benachbarte Band aufgebrachte Schicht (25).

4. Bipolare Batterie nach einem der vorhergehenden Ansprüche, wobei die Dicke jedes Bandes im Wesentlichen gleich der Dicke einer Elektrode auf derselben Seite eines Kollektors ist.

5. Bipolare Batterie nach einem der vorhergehenden Ansprüche, wobei die Dicke jedes Bandes zwischen 20 und 70 µm liegt und vorzugsweise 50 µm plus oder minus 5 µm beträgt.

6. Bipolare Batterie nach einem der vorhergehenden Ansprüche, wobei die Breite jedes Bandes zwischen 0,1 und 2 cm liegt.

7. Bipolare Batterie nach einem der vorhergehenden Ansprüche, welche einen Stapel von n elektrochemischen Zellen umfasst, mit einer Anzahl von n-2 bipolaren Stromkollektoren, wobei einer der benachbarten Kollektoren ein Anschlussstromkollektor ist und der andere der benachbarten Kollektoren der andere Anschlussstromkollektor ist.

8. Bipolare Batterie nach einem der vorhergehenden Ansprüche, wobei die Anoden aus Li₄Ti₅O₁₂ und die Kathoden aus LiFePO₄ bestehen.

9. Verfahren zur Herstellung einer bipolaren Batterie nach einem der vorhergehenden Ansprüche, welche wenigstens eine erste und eine zweite elektrochemische Zelle, die übereinandergestapelt sind und jeweils eine Anode, eine Kathode und einen Elektrolyten aufweisen, umfasst,
a/ Herstellung eines bipolaren Stromkollektors mit einer Seite, die mit der Anode aus Lithiuminsertionsmaterial der ersten Zelle bedeckt ist, und einer gegenüberliegenden Seite, die mit der Kathode aus Lithiuminsertionsmaterial der zweiten Zelle bedeckt ist;
b/ Herstellung eines ersten Stromkollektors, der dazu bestimmt ist, dem bipolaren Kollektor benachbart zu sein, und von dem eine Seite mit der Kathode der ersten Zelle bedeckt ist;
c/ Herstellung eines zweiten Stromkollektors, der dazu bestimmt ist, dem bipolaren Kollektor benachbart zu sein, und von dem eine Seite mit der Anode der zweiten Zelle bedeckt ist;
d/ Aufbringung eines Bandes aus elektrisch isolierendem Material am Umfang jeder Seite jedes Kollektors, die mit einer Kathode oder einer Anode bedeckt ist;
e/ Stapelung der drei Kollektoren mit Einfügung eines Trennelements zwischen zwei benachbarten Kollektoren, wobei die Stapelung mit Einfügung derart erfolgt, dass:
- die Kathode des ersten benachbarten Kollektors sich gegenüber der Anode des bipolaren Kollektors befindet, wobei sie durch ein erstes Trennelement getrennt sind und ihre Bänder in Kontakt gebracht sind;
- die Anode des zweiten benachbarten Kollektors sich gegenüber der Kathode des bipolaren Kollektors befindet, wobei sie durch ein zweites Trennelement getrennt sind und ihre Bänder in Kontakt gebracht sind;
f/ Erwärmung der in Kontakt befindlichen Bänder am Umfang der Kollektoren, wobei die Trennelemente jeweils mit einem Elektrolyten getränkt werden.

10. Verfahren nach Anspruch 9, wobei die Erwärmung gemäß Schritt f/ mithilfe von U-förmigen Heizbacken um die Umfangsteile der Kollektoren herum erfolgt.

11. Verfahren nach Anspruch 9 oder 10, wobei das Inkontaktbringen der Bänder gemäß Schritt e/ bei Umgebungstemperatur erfolgt.

## Claims

1. Bipolar Li-ion battery, including:
- at least a first and second electrochemical cells (C1, C2) stacked one on top of the other and each comprising an anode, a cathode and an electrolyte,
- at least one bipolar current collector (1) one face of which is covered by the anode (16) made of lithium insertion material of the first cell (C1) and the opposite face is covered by the cathode (18) made of lithium insertion material of the second cell (C2), the bipolar collector comprising at the periphery thereof, on each of the faces thereof, at least one bead (23) of an electrically insulating material forming a peripheral zone of a wall impermeable to the electrolyte of the first or second cells, surrounding same,
- at least one first current collector (13) adjacent to the bipolar collector one face of which is covered by the cathode (14) of the first cell (C1); the first adjacent collector also comprising at the periphery thereof, at least one bead (23) of an electrically insulating material also forming a peripheral zone of a wall impermeable to the electrolyte of the first cell,
- at least one second current collector (21) adjacent to the bipolar collector one face of which is covered by the anode (20) of the second cell (C2); the second adjacent collector also comprising at the periphery thereof, at least one bead (23) of an electrically insulating material also forming a peripheral zone of the wall impermeable to the electrolyte of the second cell,
**characterized in that** each impermeable wall is obtained by a technique selected from:
- molecular bonding, the material of each bead being made of aluminum oxide (Al₂O₃),
- anodic sealing between a bead (23) of the bipolar collector and the bead (23) of the adjacent collector, and
- eutectic melting between a layer (25) of eutectic point metal or metal alloy deposited on a bead of the bipolar collector and a layer (25) of eutectic point metal or metal alloy deposited on a bead of the adjacent collector.

2. Bipolar battery according to Claim 1, each impermeable wall being obtained by anodic sealing, the material of each bead being made of silicon oxide SiO₂ doped with boron.

3. Bipolar battery according to Claim 1, each impermeable wall being obtained by eutectic melting, the material of each bead being made of aluminum oxide (Al₂O₃) and the material of a layer (25) deposited on a bead being made of aluminum and germanium for the layer (25) deposited on the adjacent bead.

4. Bipolar battery according to one of the preceding claims, the thickness of each bead being substantially equal to the thickness of an electrode on the same face of a collector.

5. Bipolar battery according to one of the preceding claims, the thickness of each bead being between 20 and 70 µm, preferably 50 µm plus or minus 5 µm.

6. Bipolar battery according to one of the preceding claims, the width of each bead being between 0.1 and 2 cm.

7. Bipolar battery according to one of the preceding claims, including a stack of n electrochemical cells, with a number of n-2 bipolar current collectors, one of the adjacent collectors being a terminal current collector, the other of the adjacent collectors being the other terminal current collector.

8. Bipolar battery according to one of the preceding claims, the anodes being made of Li₄Ti₅O₁₂ and the cathodes of LiFePO₄.

9. Bipolar battery production process according to one of the preceding claims including least a first and second electrochemical cell stacked one on top of the other and each comprising an anode, a cathode and an electrolyte,
a/ production of a bipolar current collector with one face covered by the anode made of lithium insertion material of the first cell and the opposite face covered by the cathode made of lithium insertion material of the second cell;
b/ production of a first current collector, intended to be adjacent to the bipolar collector one face of which is covered by the cathode of the first cell;
c/ production of a second current collector, intended to be adjacent to the bipolar collector one face of which is covered by the anode of the second cell;
d/ deposition of a bead made of electrically insulating material at the periphery of each face of each collector covered by a cathode or by an anode;
e/ stack of three collectors with intercalation of a separator between two adjacent collectors, the stack with intercalation being performed so that:
- the cathode of the adjacent first collector is facing the anode of the bipolar collector being separate from a first separator and with the beads thereof being placed in contact;
- the anode of the adjacent second collector is facing the cathode of the bipolar collector being separate from a second separator and with the beads thereof being placed in contact;
f/ heating of the beads in contact at the periphery of the collectors, the separators each being impregnated with an electrolyte.

10. Process according to Claim 9, the heating according to step f/ being carried out using U-shaped heating jaws around the peripheral portions of the collectors.

11. Process according to Claim 9 or 10, the placing in contact of the beads according to step e/ being carried out at ambient temperature.
